# EUROPEAN PATENT APPLICATION

(11) **EP 4 745 518 A1**
(43) Date of publication of application: **20.05.2026**
(21) Application number: 24213535.8
(22) Date of filing: 18.11.2024
(51) Int. Cl.: G01B 11/25

(54) **PRE-SCAN FUNCTIONALITY FOR A LASER SCANNER**

(71) Applicant: Hexagon Innovation Hub GmbH, 9435 Heerbrugg (CH)
(72) Inventor: HEILI, Alexandre, 9450 Altstätten (CH); WINISTÖRFER, Martin, 9453 Eichberg (CH); GRÜBEL, Sebastian, 9500 Wil (CH); CHAMP, Peter, Rickmansworth WD3 (GB)
(74) Representative: Kaminski Harmann

(57) **Abstract**

The invention relates to a laser line scanner for providing a 3D geometric scanning of a surface with a first surface part having a first reflectivity and a second surface part having a second reflectivity. The inventive laser line scanner performs pre-scan measurements under the variation of projection, detector, and processing parameters of the projector, detector and evaluation units of the laser line scanner. A trained machine learning model returns a suggested parameter set based on the acquired pre-scan data.

## Description

### FIELD OF THE INVENTION

The present invention relates to a laser scanner, particularly a laser line scanner, configured to perform a pre-scan for optimizing the scan parameters.

### BACKGROUND OF THE INVENTION

For part inspection, laser scanners play an important role. They are able to measure parts to high precision in the range of micrometers and are commonly used in many industries such as aerospace, automotive, and various sectors within the industrial field like manufacturing, machinery production, and metalworking. The present invention relates to a type of laser scanners, which project a pattern to the surface and determine the surface geometry by analyzing the imaged patterns.

Patterns comprising one or more continuous sections will be called from here on as line patterns. It is clear to the skilled person that such line pattern might comprise more than one line, particularly the line pattern might be a two-dimensional pattern (i.e. grid pattern). The line pattern can also comprise dots or two-dimensional plane figures. Moreover, the pattern can be dynamic, i.e. the geometry of the pattern might change with time, particularly to provide a sweeping type scanning of a surface. All these embodiments and the suitable alternatives are treated as line patterns in the sense of the invention. Laser scanners configured to generate such patterns will be called laser line scanners. Inter alia WO 2014/091307 A2 discloses an example of such a laser line scanner projecting a pattern onto a surface. Laser line scanners differ from laser scanners that utilize rotating or oscillating beam deflection elements, such as those discussed in US 2021/0149030 A1.

The imaged patterns are then analyzed using a triangulation method to provide a point cloud representation, or suitable alternative three-dimensional digital representation, of the scanned object. Particularly the scanner might have more than one detector element to acquire detector images from different viewing angles. Triangulation in the sense of the invention also includes methods which utilize a time series of the imaged patterns and the movement of the scanning instrument.

The quality of 3D scanned data is influenced by many factors, such as scanned surface color, glossiness, geometry, ambient light, scanner resolution, proper selection of scanned segments, etc. In particular, surface color and glossiness are known to be important sources of errors. In the prior art an empirical selection of the scanner's sensor aperture and shutter time is proposed depending on the characteristics of the scanned surface. Such selection is, however, heavily reliant on the skill level and the accumulated experience of the operator. Knowledge transfer takes place primarily at the level of operator training. I.e. even in cases where a solution for optimal scan parameters exists in principle, a long learning curve may be required. Even more complicated is the case where optimal scan parameters for unknown objects must be derived based on an interpolation or extrapolation of known objects.

Recently alternatives to the above-mentioned fully manual procedures emerged. Especially the introduction of dynamic exposure settings and automatic noise elimination functions allowed great improvements in scanning usability and data quality. Particularly relevant is image acquisition using high dynamic range (HDR) mode. In HDR mode, an image is created based on several, usually three, partial images. Each image is taken under different exposure settings, particularly exposure duration. The HDR mode ensures that points from the darkest to the brightest areas are clearly seen. However, this process can sometimes make images appear noisier or grittier because it crams a much higher dynamic range into the same bit depth. Despite this drawback the ability to capture more points in an image often outweighs any issues with the noise. However, with extremely dark or shiny objects, all points might not be captured in the point cloud, which nevertheless necessitates manual provision of the settings.

Prior art methods are also time consuming, particularly as the operator can only verify the results of the scan after the data acquisition has been completed. In some cases, the parameters can be so far from the optimum values that the scan must be discarded, and a new acquisition must be performed. In the worst case, an iterative approach with many separate, and in itself unsuccessful, scans may be necessary. This could not only result in inefficient work, but also in increased frustration and psychological stress as well as reduced work satisfaction for the operator.

It is therefore highly desirable to find a robust method that is able to set optimal parameters before or at the beginning of the scan. This reduces not only inspection time and effort but also yields better and repeatable results.

### OBJECT OF THE INVENTION

In view of the above circumstances, one object of the present invention is to improve the optimization of the scan parameters for laser line scanners, particularly to increase the parameter space accessible in said optimization.

Another objective of the present invention is to improve the knowledge accumulation and transfer regarding the optimization of said parameters.

These objectives are at least partly achieved by realizing the characterizing features of the independent claims. Features which further develop the invention in an alternative or advantageous manner are described in the dependent claims.

### SUMMARY OF THE INVENTION

The invention relates to a laser line scanner for providing a 3D geometric scanning of a surface. The surface comprises a first surface part with a first reflectivity and a second surface part with a second reflectivity. The second reflectivity is smaller than the first reflectivity. Reflectivity in the sense of the invention is an empirical measure of a given surface part to reflect an emitted laser line towards the detector of the laser line scanner under normal measurement conditions. In other words, while it can refer to material properties of the surface, such as the Fresnel reflection coefficient, and be synonymous with it for diffuse scattering surfaces, it can also be influenced by further properties such as surface quality or surface shape. Especially for objects with strong specular reflection, the shape of the object can also be decisive, i.e. a large part of the laser light might not be reflected in the direction of the detector, but in a different direction. Reflectivity in the sense of the invention particularly represents a reflectivity for the specific wavelength range associated with the laser.

The skilled person understands that the inventive laser line scanner might also be adopted to scan surfaces having more complex geometries and material characteristics, e.g. a variety of parts with different reflectance, color and scattering properties. Moreover, nothing prevents the application of the inventive laser scanner during the scanning of an essentially homogeneous surface.

By way of example many aspects and specific embodiments of the invention can be illustrated with objects having glossy part and a dark matte part, e.g., a chromed bumper of a vintage automobile as the first surface part against the dark painted main body as the second surface part. While such objects are challenging for prior art laser line scanners, the present invention, by providing optimal measurement parameters, is advantageously applicable to cases where the contrast difference between the first and second surface parts is less pronounced.

The laser line scanner comprises a projector unit, a detector unit, an evaluation functionality, a performance assessment functionality, a parameter database, a pre-scan functionality and a prediction functionality.

The projector unit is configured to project a laser line pattern onto the surface according to settable projection parameters. The laser line pattern comprises at least one essentially continuous laser line section. The projection parameters are used for setting different projected laser light intensities by the projector unit. The projection parameters might comprise further parameters particularly a geometry and/or a time sequence of the laser lines. Laser light intensity in the sense of the invention might represent an intensity distribution. Particularly the laser line pattern might be realized as a coded pattern having a spatial intensity variation.

The projector unit might also comprise further light sources. These further light sources might include marker or point pattern projectors or diffuse light sources. The latter include LED light sources, particularly embodied as ring light, to provide a diffuse background illumination of the object. When the projector unit comprises such elements the projection parameters can also comprise data for setting these further light sources. The projection parameters might particularly comprise data regarding the wavelength and intensity of the further light sources.

The skilled person understands that the word "projector unit" represents a functional unit. The projector unit might comprise distinct structural elements, particularly when it comprises a plurality of light sources. The same applies analogously to the other components of the laser line scanner.

The detector unit is configured to provide detector images regarding the surface with the projected laser line pattern according to settable detector parameters. The detector parameters are used for setting different light sensitivities of the detector unit. The detector images can be color or grayscale images regarding the surface. The information content of the detector images could be limited to the recorded image of the laser lines. Particularly the detector might be configured to acquire the reflected laser line pattern in a pixel resolved manner. The detector might have specific narrowband filters to suppress the ambient light.

Laser line scanners typically comprise a plurality of detector elements that are spaced apart to enable triangulation of a laser line. The detector image in the sense of the invention can represent a totality of those images provided by those detector elements. The detector parameters might comprise a plurality of sets associated with each detector element from the set.

The evaluation functionality is configured to provide triangulation-based 3D geometric data regarding the surface based on the detector images and a set of processing parameters. The processing parameters comprise different processing settings for providing the 3D geometric data. The 3D geometric data can be particularly embodied as or configured to provide a point cloud representation of the surface.

The performance assessment functionality is configured to extract key performance indicators (KPI) and to provide a scan quality value based on the KPI. The KPI reflect a set of assessments regarding the surface itself and aspects of the quality of the 3D geometric data.

KPI, in the sense of the invention, represent on the one hand surface related information comprising an assessment regarding at least the first and second reflectivity. The KPI might comprise further similar data particularly regarding a color and a shape associated respectively with the first and second parts. Such information might be provided from independent measurements or provided manually. The reflectivity might also be provided by directly analyzing the light intensity of reflected laser line sections.

The KPI also comprise assessments reflecting the quality of the detector images and/or 3D geometric data. Such data can be particularly derived by analyzing the 3D geometric data and/or the respective detector images. The KPI comprise assessments reflecting at least a signal to noise ratio of the detector image, a sharpness of the detector image and a point density of the 3D geometries data, particularly regarding outliers and voids in the 3D geometric data. The scan quality value can be considered as a composite assessment based on this part of the KPI. The KPI might provide said assessments regarding the regions associated with specific surface parts instead of the whole detector image or the 3D geometric data.

The parameter database comprises a set of different projection parameters, a set of different detector parameters, and a set of different processing parameters. It is clear to the skilled person that although the projection, detector and processing parameters are not completely decoupled, they represent fundamentally different aspects of the laser line scanner. Thus, they can be adjusted to a large degree independently of each other. Finding the optimal settings is therefore a multidimensional fitting problem.

Despite the independence of said parameters actual embodiments of the laser scanner might be limited to correlated variation of the parameters. On the one hand such limitations might be necessary to protect the operator and/or the device. By way of example the highest laser intensity might not be selectable together with the highest sensitivity of the detector unit. On the other hand, such correlated variation might also limit the parameter space by excluding the obviously non-working settings.

The pre-scan functionality is configured to perform a set of different pre-scan measurements. Each of the pre-scan measurements comprises (i) providing pre-scan parameters comprising a selected set of projection, detector, and processing parameters based on the parameter database, (ii) acquiring a pre-scan detector image associated with the pre-scan parameters by projecting the laser line pattern according to the selected projection parameters and imaging the surface according to the selected detector parameters, (iii) deriving respective pre-scan 3D geometric data by the evaluation functionality according to the selected processing parameters. The pre-scan functionality might further comprise deriving a pre-scan KPI by the performance assessment functionality. Preferably the mentioned steps are carried out in quick succession. Particularly the pre-scan consists of a continuous data acquisition during which the possible parameters are looped through automatically. Such pre-scan loops might be performed at regular intervals during the main scanning, and/or the main scanning sequences might be performed with a degree of variation to provide such pre-scan loops. The present invention is, however, not limited to such embodiments. Moreover, a variation of the execution of the steps is also possible, particularly as the image acquisition and the deriving of the 3D geometric data can be performed independently of each other.

In general, such pre-scan must be carried out within a reasonable time frame. Or in other words, only a set of representative parameters can be tested by the pre-scan. While the pre-scan parameters can be adapted to the type of objects under investigation, nevertheless it is unlikely that any one of the pre-scan measurements is performed with an optimal parameter set.

The prediction functionality is configured (i) to asses a performance threshold criterion regarding a required scan quality value, in particular regarding a required signal to noise ratio of the detector image, a required sharpness of the detector image, and a required point density of the 3D geometric data, (ii) to access a trained model configured to generate suggested parameter sets and corresponding estimated scan quality values, wherein the trained model is trained based on a training database comprising scan data and ground truth parameters, (iii) to perform an inference by taking input data and passing the input data to the trained model, wherein the input data comprises (a) pre-scan parameters, and (b) at least one of pre-scan 3D geometric data, pre-scan detector image and pre-scan key performance indicators, and (iv) to provide the suggested parameter set as output data of the inference such that the estimated scan quality value associated with the suggested parameter set fulfills a performance threshold criterion.

The performance threshold can be pre-programmed and represents an aggregate optimum that meets certain limits of adequacy for a variety of performance indicators. The threshold criterion might be provided by the user to optimize specific performance indicators, e.g. the signal to noise ratio and/or the density of the point cloud and/or least number of outliers.

The trained model might be provided by a convolutional neural network. Particularly a supervised machine learning model might be applied, which was trained to map pre-scan features from a training set to their corresponding ground truth optimal parameters defined by an expert.

Alternatively or additionally, an adaptive learning of the model facilitating ongoing optimization might be used. In other words, typical operators are likely to scan a finite array of objects repetitively. By incorporating the function of on-the-fly learning, the model can progressively familiarize itself with frequently scanned objects. After each scan of a similar object, the model assesses the quality of the output, adjusts its parameters, and utilizes the updated model for future scans. With every loop, the model will become more adept at determining the optimal settings for that specific object. The assessment of scan quality, crucial for the feedback loop, can be based on a series of metrics, e.g. point density, sharpness, quality of extracted textures, noise levels, etc. Once these metrics are determined, and set as KPI, they can also be used as a "reward" in a reinforcement learning framework guiding the model to optimize laser scanner parameters and thereby improving future scan results.

The machine learning model, particularly when trained on-the-fly, thus has access to a pool of measurements, or a knowledge base during the training and retraining phases. Said pool might represent measurements performed by most experienced operators of an organization. Alternatively, the pool might represent an external knowledge base pre-provided by a specialist organization, particularly the manufacturer or the distributor of the laser line scanner. In another alternative, the pool represents a closed or open knowledge pool that is accessible to subscribers or anyone to upload their own measurement data.

The machine learning leverages said training database covering a variety of surfaces, particularly with annotations of optimal parameters manually defined by an expert, to map the pre-scan features to the ground truth parameters.

During the potential retraining the model starts by making initial predictions for optimal parameters for a given object using pre-scan measurements. Then, a feedback loop is created. After each scan of a similar object, the model assesses the quality of the suggested parameters, adjusts itself, and utilizes the updated model for future scans. In other words, the training database and with that the trained model evolves with the accumulation of data. The model learns over multiple parts/objects, accumulating the knowledge of optimal parameters and storing it in the pool. This knowledge can be used on next scan / measurement. With every loop, the model should become more adept at determining the optimal settings for that specific object.

The inventive laser line scanner can thus efficiently provide an optimized solution for the projection, detector, and processing parameters by inferring the suggested parameters from pre-scan measurements. This is particularly advantageous for previously not measured objects and/or for inexperienced operators. Moreover, an efficient knowledge transfer is achieved by digitalizing and structuring the results of previous experience.

In some embodiments, the laser line scanner is configured for handheld operations. However, even such handheld laser scanners might comprise respective interfaces for mounting the laser line scanner on specific actuators, e.g. on a robotic arm.

In some embodiments, the projection parameters comprise data for setting a temporal or spatial variation of the projected laser light intensity by the projector unit.

Spatial variation of the laser light intensity in the sense of the invention can mean spatial variation within a single laser line, particularly a coded pattern comprising domains with higher and lower laser intensity. Spatial variation can also represent a plurality of laser lines, particularly arranged in a grid, more particularly an orthogonal grid. It is clear that said pattern represents a projection pattern. Or in other words, the projector unit is configured to set the projection directions in the angular space, while the pattern appearing on the surface is also influenced by the surface geometry. The skilled person understands that said grid might be adjusted based on the shape of the surface to be scanned.

A non-exhaustive list of the temporal variation includes (i) a HDR-like projection with a stepwise, systematic variation of the laser light intensity, (ii) a continuous deflection of the projection pattern, e.g. by rotating a prism element, (iii) a variation of a diffuse/background illumination intensity as compared to the laser light intensity, (iv) a variation of the pattern geometry, e.g. projecting a first pattern comprising a first set of lines oriented to a first direction and subsequently projecting a second set of lines oriented to a second direction or (v) projecting first grid pattern with a first grid spacing and subsequently projecting a second grid pattern with a second grid spacing. The skilled person understands that a combination of the listed embodiments, such as projecting two sets of lines and rotating them in different directions, or providing suitable alternatives is also possible in the sense of the invention.

In some specific embodiments, the laser line pattern comprises a first laser line and a second laser line. The first laser line has higher intensity than the second laser line.

In some specific embodiments, the projection unit is configured to project a laser line pattern comprising a plurality of laser lines. The laser line pattern might be embodied as grid pattern of the laser lines. In such embodiments the projection parameters comprise data regarding the number of the laser lines and a distance between the laser lines.

In some specific embodiments, the projection parameters define (i) a first laser line pattern having a first laser light intensity and a first distance between the laser lines, and (ii) a second laser line pattern having a second laser light intensity and a second distance between the laser lines. The second laser light intensity and/or the second distance respectively differ from the first laser light intensity and first distance.

In some embodiments, the detector parameters comprise data for setting a temporal variation of the light sensitivities of the detector unit.

In some specific embodiments, the detector parameters define a first part image and a second part image, wherein the second part image is acquired with a higher light sensitivity. Or in other words the detector is operating in HDR mode. Preferably the sensitivities are selected such the first part image is associated with the first surface part and the second part image is associated with the second surface part. The inventive laser line scanner enables an optimization of the HDR mode considering the reflectivity, and particularly the color and geometry, of the surface parts. Inter alia the dynamic range of the images is expanded only to the extent, which is necessary. This is advantageous for optimizing the signal-to-noise ratio and/or the depth of detail. The generalization of this step to surfaces having more than two characteristic parts can be performed accordingly.

In some specific embodiments, the suggested parameters are configured to provide a temporal variation of the sensitivities of the detector unit synchronized with the temporal variation of the projected light intensities. The above-mentioned HDR-mode can provide even more optimized results by a synchronized variation of the projected light intensity and the sensitivity of the detector unit. Such synchronization is not possible with prior art techniques as the parameter space is too complex to provide meaningful results. The inventive system, however, by relying on a large number of previous measurements on similar objects and machine learning can perform such optimization.

In some embodiments, the detector parameters comprise data regarding (i) an acquisition time or integration time, (ii) an aperture opening, (iii) optical filter data, particularly the bandwidth and suppression factor of the filter, (iv) a gain, and (v) a noise threshold. Specific embodiments of the inventive laser line scanner, unlike to the prior art systems, enable an optimization of all these parameters in an efficient and meaningful manner. The skilled person understands that alternative embodiments of the inventive laser line scanner might optimize only a subset of these parameters.

In some embodiments, the evaluation functionality is configured to provide a noise reduction and/or an outlier identification and/or a smoothing and/or an interpolation filling of voids in the images and/or 3D geometric data. The processing parameters comprise data regarding said noise reduction and/or outlier identification and/or smoothing and/or interpolation filling of voids.

In some embodiments, the processing parameters comprise data regarding a brightness and contrast adjustment and a sensitometry correction.

In some specific embodiments, the detector image comprises a first part image acquired with a first projection and detector parameter and a second part image acquired with a second projection and detector parameter. The processing parameters comprise data regarding a spatially resolved mixing of the first part image and the second part image. In other words, the processing parameters comprise data regarding the execution of the image reconstruction for an HDR-mode.

In some embodiments, the laser line scanner is configured (i) to perform an additional pre-scan measurement using the suggested parameter set, and (ii) to perform a comparison of the scan quality values associated with the pre-scan measurement and the additional pre-scan measurement. Particularly the laser line scanner is configured to accept the suggested parameter set based on the comparison. In other words, the laser line scanner is configured to verify whether the suggested parameter set represents an optimized solution as compared to the pre-scan parameters.

In some embodiments, the laser line scanner comprises a camera. The camera might be an RGB camera or an alternative color camera. The camera is configured to provide a camera image comprising radiometric information regarding the first surface part and the second surface part. In the case of a color camera the camera image also comprises color information. Said information might be used to provide an estimate regarding the first and second reflectivity and adopt the pre-scan measurements and/or the prediction functionality accordingly.

In some specific embodiments, the pre-scan measurement further comprises (i) acquiring a camera image comprising representative portions of the first surface part and the second surface part, (ii) deriving the first reflectivity and the second reflectivity based on the camera image, and (iii) providing the pre-scan parameters by the prediction functionality based on the first and the second reflectivity and the trained model such that the pre-scan parameters are associated with estimated scan quality values fulfilling the performance threshold criterion and matching first and second reflectivity. Or in other words, a coarse first optimization is performed with the pre-scan, and second fine optimization is performed based on the adjusted pre-scan parameters. In that manner an efficient optimization can be performed.

In some specific embodiments, the pre-scan further comprises (i) deriving first color data corresponding to the first surface part and second color data corresponding to the second surface part based on the camera image, and (ii) providing the pre-scan parameters further based on the first and second color data such that the pre-scan parameters are associated with matching first and second color data.

In some embodiments, the laser line scanner is configured to perform a main scanning measurement, wherein the main scanning measurement provides main scanning 3D geometric data according to the suggested parameter set. Particularly the laser line scanner is configured to derive the main scanning KPI and main scanning scan quality value by the performance assessment functionality.

In some embodiments, the laser scanner is configured to access a remote computing resource, in particular a cloud computing resource, and the trained model is provided by the remote computing resource.

In some specific embodiments, the laser line scanner further comprises a post-scanning feedback functionality. The post-scanning feedback functionality is configured (i) to receive user feedback regarding a quality perception of the 3D geometric data, and (ii) to provide the user feedback and the suggested parameter set, in particular the main scanning key performance indicators, and main scanning scan quality value to the remote computing resource hosting the trained model and/or the training database. Advantageously, such feedback can be used to improve the model. The skilled person understands that the user feedback might also comprise data regarding the skill level of the user, and feedback from more experienced users might have higher weighting in such re-training. I.e. said feedback data can be aggregated and regularly used to retrain / refine the model over time.

In some specific embodiments, the laser line scanner is configured to receive user-provided scanning parameters. The laser line scanner is configured to perform an alternative main scanning utilizing the user-provided scanning parameters. The post-scanning feedback functionality is further configured to provide the user-provided parameter set, alternative main scanning key performance indicators, and alternative main scanning scan quality value to the remote computing resource hosting the trained model and/or the training database. In other words, the expert user can manually provide an allegedly better solution, particularly test it against the solution provided by the trained model. The solution provided by the user, particularly a comparison of the solution of the user and the model, can be utilized in the framework of a subsequent re-training.

The invention also relates to a computer program product. The computer program product comprises a program code which is stored on a machine-readable medium or embodied as an electromagnetic wave. The program code comprises a program code segment and has computer-executable instructions for performing the computational steps associated with the pre-scan functionality and/or the prediction functionality.

The computer program product can be particularly executed on a computing unit controlling the laser line scanner. Said computing unit might be an external computer, e.g. embodied as a general-purpose computer in the form of a tabletop- or portable computer or a smartphone. The computing unit might be a computer or controller integral to the laser line scanner. The computing unit might be a distributed computing resource having integral and external components.

The inventive computer program product might also be realized in a variety of manners. E.g. as an independent computer program product, as a specific application or subroutine of a more general control program for the laser line scanner or as an update of an existing pre-scan functionality of the prior art control program. The present invention is not limited to any of those realizations.

Some embodiments of the computer program product, particularly when installed on a control computer of the laser line scanner, when executed cause the laser scanner (i) to provide pre-scan parameters comprising a selected set of projection, detector, and processing parameters based on a parameter database, (ii) to acquire pre-scan detector images according to the projection and detector parameters, (iii) to derive respective pre-scan 3D geometric data according to the selected processing parameters, and in particular to derive pre-scan key performance indicators, (iv) to access a performance threshold criterion regarding a required scan quality value, in particular regarding a required signal to noise ratio of the detector image, a required sharpness of the detector image and a required point density of the 3D geometric data, (v) to access a trained model configured to generate suggested parameter sets and corresponding estimated scan quality values, wherein the trained model is trained based on a training database comprising scan data and ground truth parameters, (vi) to perform an inference by taking input data and passing the input data to the trained model, wherein the input data comprises pre-scan parameters, and at least one of pre-scan 3D geometric data, and/or pre-scan detector images, and/or key performance indicators, and (vii) to provide the suggested parameter set as output data of the inference such that the estimated scan quality value associated with the suggested parameter set fulfills a performance threshold criterion.

In some embodiments, the computer program product has further computer-executable instructions for causing the laser line scanner to perform a scanning using the suggested parameter set.

### BRIEF DESCRIPTION OF THE DRAWINGS

By way of example only, specific embodiments of the invention will be described more fully hereinafter with reference to the accompanying figures, wherein:
Figure 1 shows schematically a laser line scanner projecting a pattern to an object;
Figure 2 shows examples of line patterns in the sense of the invention;
Figure 3 shows an example of providing 3D geometry data based on the acquisition of a first part image with low light sensitivity and a second part image with high light sensitivity;
Figure 4 depicts schematically the content of an exemplary KPI;
Figure 5 shows schematically, by a flowchart, the steps of a pre-scan measurement;
Figure 6 shows schematically, by a flowchart, an embodiment of the prediction functionality;
Figure 7a illustrates a training of the trained model by providing expert measurement.
Figure 7b illustrates a training of the trained model by supervised learning.
Figure 7c illustrates a training of the trained model by reinforcement learning.

### SPECIFIC EMBODIMENTS OF THE INVENTION

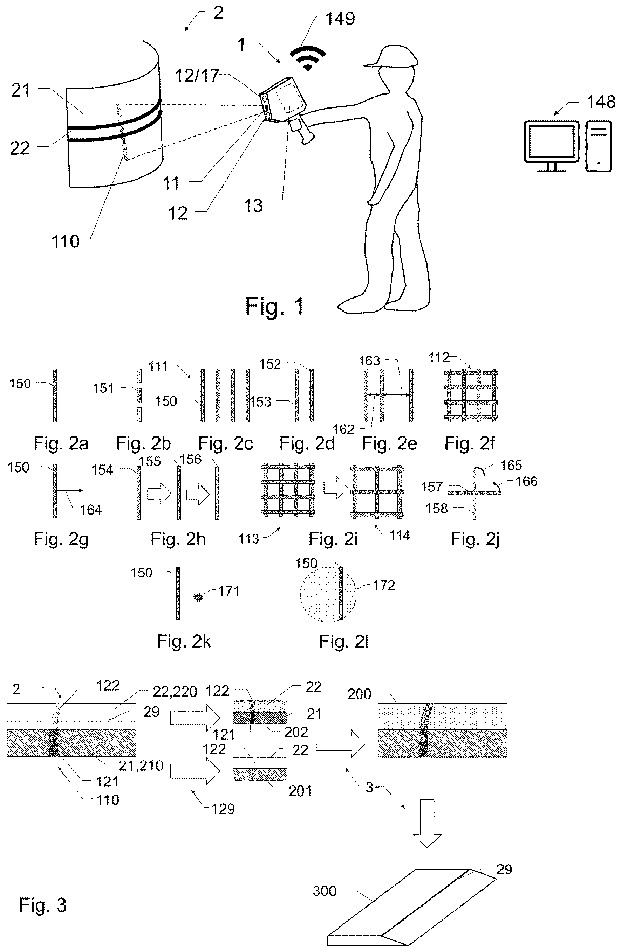

Figure 1 shows schematically an operator using a laser line scanner **1** in scanning a surface **2** of an object. The surface **2** comprises a first surface part **21** having a first reflectivity, in this example matte white, and second surface part **22** having a second reflectivity, in this example matte black. The laser line scanner **1** comprises projector unit **11** which projects a laser line pattern **110**, here consisting of a single laser line, to the surface **2.** The laser line scanner **1** also comprises a detector unit **12**, here depicted as a stereo camera pair. The detector unit **12** acquires detector images regarding the surface **2** with the projected laser line pattern **110.** Many embodiments of the detector images are known to the skilled person. Fundamentally different are detector images, wherein only the laser line pattern **110** is imaged and detector images comprising ambient information regarding the surface **2** as a whole. Irrespective of the type of the detector image a challenge regarding the imaging of surface **2** having a first surface part **21** with a first reflectivity and a second surface part **22** with a second reflectivity is illustrated. Particularly the observability of the laser line pattern **110** is different on the bright first **21** the dark second surface part **22.**

In the depicted embodiment one camera of the stereo camera pair **12** also acts a color **17**, particularly an RGB camera, configured to acquire color information regarding the surface parts **21,22.** Said color information might also be processed by the inventive laser line scanner. The skilled person understands that further embodiments, in particular wherein the color camera **17** is spatially and functionally distinct from the detector unit **12** are also possible

The depicted laser line scanner **1** also comprises a controller **13** or computing unit. Said controller **13** might provide different functionalities, particularly the evaluation, performance assessment, the pre-scan and prediction functionalities. Moreover, the controller **13** can also comprise a non-transient memory with the parameter database saved on said non-transient memory. The depicted laser line scanner **1** comprises a wireless connection **149** to access the training database. Said wireless connection **149** might be used to access remote computing resources **148**, depicted as a tabletop computer, performing a part of the above functionalities. Alternatively or additionally, wired connections might also be used for the same purposes. The skilled person understands that the remote computing resource **148** might be a distributed, particularly a cloud based, resource.

Figure 1 depicts a handheld laser line scanner **1.** The present invention is not limited to that embodiment or use. Particularly the invention is equally applicable with mounted laser line scanners, particularly laser line scanners mounted to robotic arms or vehicles. Handheld laser line scanners 1 might comprise appropriate interfaces or might have specific extension for a mounted operation.

Figure 2a-2l shows some exemplary embodiments of the laser line patterns. The shown examples are non-exhaustive, in particular it is possible to combine aspects from the depicted embodiments with each other.

Figure 2a shows a laser line pattern consisting of a single continuous section, or laser line **150** with substantially constant intensity within the section **150.**

Figures 2b-2f depict schematically exemplary embodiments of the spatial variation. Figure 2b shows a laser line pattern having a spatial intensity variation, particularly embodied as a single line coded pattern **151.** Such coded patterns are advantageous as they provide further data e.g. regarding the orientation and distance of the laser line scanner to the surface. Figure 2c depicts a linear pattern **111** with substantially similar laser lines **150** projected equidistantly. Figure 2d depicts a laser line pattern with two laser lines **152,153.** The first laser line **152** has higher intensity than the second laser line **153.** Similarly to the single line coded pattern **151** of Figure 2b the distinct character of the laser lines **152,153** provides additional information, particularly regarding the central line. Figure 2e depicts yet another alternative, where instead of the different intensity of the lines the different distances **162,163** between the lines provide such information. Figure 2f depicts a grid pattern **112**, wherein a first set of lines oriented to a first direction and a second set of lines oriented to a second direction are projected. Such grid patterns might also be provided by an alternating projection of the lines.

Figures 2g-2j provide examples of the temporal variation of the laser line pattern. In Figure 2g the laser line is scanned over a range by moving **164** it in a direction, by way of example this can be realized by a tiltable deflecting element such as a mirror or a prism. Figure 2h depicts an embodiment, wherein the laser light intensity of the laser line **154-156** is systematically varied, e.g. in an HDR-like illumination. Figure 2i depicts an embodiment wherein two different grid patterns **113,114** are subsequently projected with different distance between the laser lines. Alternatively or additionally, the laser light intensity might also be varied. Figure 2j depicts an embodiment where two laser lines **157,158** are rotated in different directions **165,166.**

Figure 2k-2l depicts an embodiment wherein a further light also illuminates the surface. In Figure 2k a marker light **171** is projected to the surface, particularly by a light source independent of the laser line scanner, while in Figure 2l a diffuse background illumination **172** is provided, e.g. by a LED integrated to the laser line scanner. The relative intensity of the laser line **150** with respect of these further lights **171,172** can also be one of the projection parameters.

The skilled person understands that projection parameters in the sense of the invention provide variable parameters involved in the generation laser line patterns **110-114** as shown in Figures 1 and 2. The inventive laser line scanner optimizes the projection parameters, and the resulting laser line patterns **110-114** to increase the quality of the resulting 3D geometry data.

Figure 3 shows surface **2** comprising a first surface part **21** with a first reflectivity **210** and a second surface part **22** with a second reflectivity **220.** The second reflectivity **220** is smaller than the first reflectivity **210.** I.e. the first surface part **21** produces a higher reflected light intensity, as represented by darker tone of the first surface part **21.** The depicted surface **2** has an edge **29** in the second surface part **22.**

A laser line pattern **110**, comprising only a single line in this example, projected to the surface **21** is also influenced by the different reflectivity **210,220.** The first part of the laser line **121** reflected from the first surface part **21** is more intense than the second part of the laser line **122** reflected from the second surface part **22.**

To achieve an optimal light intensity the detector parameters are set such that the detector sequentially acquires **129** two part-images **201,202.** The second part image **202** is acquired with a higher light sensitivity than the first part image **201**, e.g. the acquisition time, the aperture or the gain is set to be higher during the acquisition of the second part image **202.** The higher light sensitivity increases the visibility of the second part of the laser line **122** in the second part image **202** as compared to that of the first part image **201.** As a drawback, the noise level of the second surface part **22** increases, while the first part of the laser line **121** will get oversaturated, thus its position precision decreases. Moreover, the contrast between the laser line and the non-illuminated parts of the first surface part **21** decreases.

In the next step the evaluation functionality **3** produces the detector image **201** from the part images **201,202.** In the depicted example it is performed such that the first part image **201** is associated with the first surface part **21** and the second part **202** image is associated with the second surface part **22.** Finally, the 3D geometric data **300** is reconstructed based on the detector image **200**, particularly using a set of detector images **200**, wherein the laser line pattern **110** occupies a different position on the surface **2.** The evaluation functionality **3** might comprise further steps such as noise suppression, smoothing, interpolating the missing parts of the 3D geometric data **300.**

Many aspects of the in Figure 3 depicted HDR acquisition are in principle known in the prior art. Such prior art systems however perform the acquisition using a pre-set acquisition and/or projection parameters. The inventive laser line scanner performs the depicted acquisition and data evaluation in an adaptive manner. I.e. it performs a pre-scan measurement series under the variation of the projection, detector and processing parameters and infers the optimized parameters based on the application of the trained model to the pre-scan measurements.

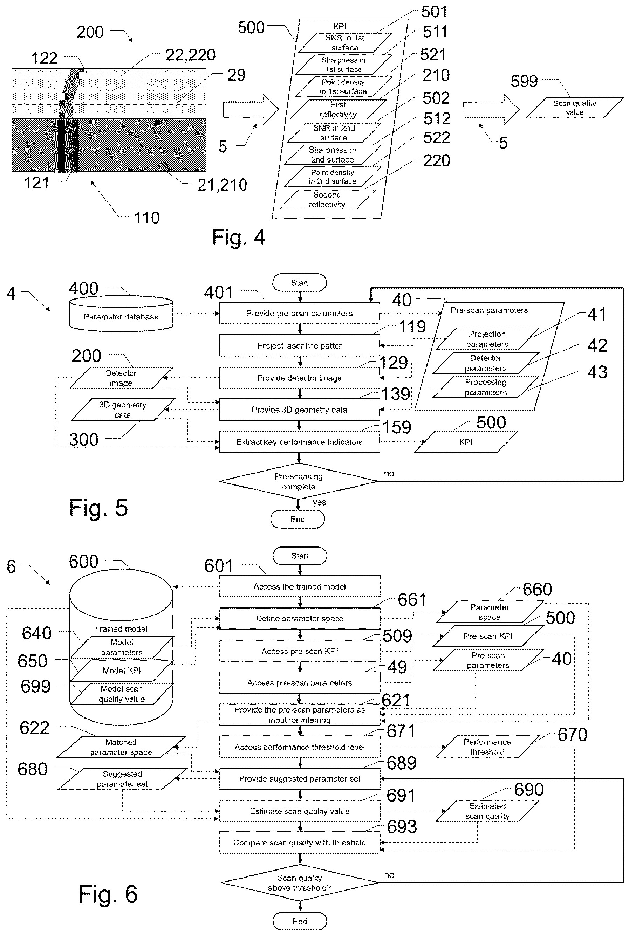

Figure 4 shows, schematically, the generation of the KPI **500** and the scan quality value **599** by the performance assessment functionality **5.** In the depicted embodiment the KPI **500** is generated based on the detector image **200.** Additionally or alternatively, the KPI might contain assessment regarding the 3D geometric data. The depicted detector image comprise data regarding a surface comprising a first surface part **21** with a first reflectivity **210** and a second surface part **22** with a second reflectivity **220.** An edge **29**, as a geometric feature, is also present in the second surface part **22.** The detector image also comprises the imaged laser line pattern **110**, the laser line pattern **110** comprises a first part **121** reflected by the first surface part **21** and a second part **122**, reflected by the second surface part **22.**

The depicted KPI **500** comprise assessments regarding the first **21** and second surface part **22** as separate elements. Such detailed information is beneficial as it allows a more accurate prediction when applying the trained model to the pre-scanning measurements. The KPI **500** comprises data regarding the first **210** and second reflectivity **220.** Said data might be derived from the detector image **200** itself, e.g. by analyzing the imaged laser line intensity with respect to the projection and imaging parameters. The reflectivity **210,220** might be determined using additional measurements. Apart from the reflectivity further surface related data might be extracted to the KPI **500**, particularly explicit surface color or orientation related data.

The KPI **500** might comprise image quality related data. In the depicted example signal to noise ratio **501,502**, and sharpness **511,512** particularly with respect to edges **29**, associated with the respective surface parts **21,22** are extracted. While not shown, data regarding the 3D geometric data, e.g. point density **521,522** might also be comprised by the KPI **500.** Based on the KPI **500** the performance assessment functionality **5** also provides a scan quality value **599.** The scan quality value **599** can be seen as a composite index, e.g. a weighted average, of the respective quality related features of the KPI **500.** The actual calculation of the scan quality value **599** depends on the scan task. E.g. whether high edge contour or low noise is more important.

Figure 5 shows schematically, by a flowchart, the steps performed by an exemplary embodiment of the pre-scan functionality **4.** Flow lines / commands are depicted with bold lines while data lines are depicted with dashed lines. Some flow- and/or data lines might not be shown in the schematic flowcharts for transparency reasons. Moreover, this and any further flowcharts focus on certain aspects of the present invention, i.e. the information relating to further aspects can be abstracted. For the sake of transparency only a single pre-scan measurement with a single set of pre-scan parameters **40** is shown. The skilled person understands that the loop performed provides a variety of pre-scan parameters **40** and a set of KPI **500**, particularly detector images **200** and 3D geometry data **300**, associated with the corresponding per-scan parameters **40.**

As the first step the pre-scan parameters **40** comprising projection **41**, detector **42**, and processing parameters **43** are provided **401** based on a parameter database **400.** The providing **401** of the pre-scan parameters **40** might be performed using a pre-set sequence independently of the surface to be scanned or in an adaptive manner. Particularly the pre-scan parameters **40** might be adapted on-the-fly based on a previously determined **159** KPI **500.** Alternatively or additionally, further input data, particularly RGB-images regarding the surface might be utilized during the providing **401** of the pre-scan parameters **40.**

This step is followed by the actual pre-scan measurement comprising the steps of projecting **119** the laser line pattern according to the projection parameters **41** (e.g. as shown in Figure 2), acquiring **129** the detector image **200** and deriving **139** the 3D geometry data **300** according to the detector **42** and processing parameters **43** (e.g. as shown in Figure 3). Finally, KPI **500** are extracted **159**, wherein the KPI comprise surface related data, comprising the reflectivity of the parts, and quality related data (e.g. as shown in Figure 4). The extraction **159** of the KPI **500** is optional and might be omitted in alternative embodiments of the pre-scanning functionality **4**, a later inferring of the suggested parameters can be performed on the basis of the detector image **200** and/or the 3D geometry data **300.**

Figure 6 illustrates the aspects of the prediction functionality **6** by a schematic flowchart. The prediction functionality **6** accesses **601** a trained model **600.** The trained model **600** is trained on the basis of ground truth provided by an expert, e.g. on model scan parameters **640** and the associated model KPI **650** and model scan quality values **699.** The trained model is leveraging said data to map the pre-scan features to the ground truth parameters, thereby providing **661** the parameter space **660.** The trained model **600** might be stored in the memory of the laser line scanner. Alternatively, the trained model **600** might be stored on an external, particularly web-based, computing resource.

The parameter space **660** represents projection, detector and processing parameters, which can be theoretically set by the laser line scanner. Particularly the parameter space **660** also represents the type of the surface investigated, said information is provided by the model KPI **650.** The skilled person understands that the parameter space **660** extends beyond the actual measurements. Particularly the parameter space **660** covers combination of parameters not tested or additionally refined beyond the actual scan data. Owing to the complexity of possible adjustments no simple analytical or numerical models can provide an adequate description. By essence, the trained model can suggest parameter values and combinations beyond those it has seen during training thanks to its generalization capabilities.

In the next steps the depicted embodiment of the prediction functionality **6** accesses **49,509** the pre-scan KPI **500** and the pre-scan parameters **40.** These are provided by the pre-scan functionality, e.g. as shown in Figure 5. Alternatively or additionally, the detector images or the 3D geometry data might also be provided to the prediction functionality **6.** In the following the pre-scan parameters **40.** with the parameters space based on the pre-scan KPI **500** along with the pre-scan measurements are provided as input data for an inference step **621.** In other words, the prediction functionality **6** localizes the pre-scan KPI **500** and the pre-scan parameters **40** in the parameter space. By that manner information regarding parameters that are not varied, particularly fixed by external constraints, in the pre-scanning can also be gained. As a result, a "matched" parameter space **622** is provided **621.** By way of example the matched parameter space **622** represents the domain of projection, detector and processing parameters which is reachable by the laser line scanner as well as the relevant surface properties, particularly the reflectivity is fixed.

Based on this matched parameter space **622** a suggested parameter set **680** can be provided **689.** Particularly an optimal parameter set can be provided within the matched parameter space **622.** The advantage of this approach is that complex parameter combinations, which cannot be reasonably tested by a simple pre-scanning can be thus derived. Moreover, the prediction functionality 6 might extract data regarding non-tested parameters, e.g. suggest a noise threshold based on the trained model **600** and the matched parameter space **622,** even though this processing parameter was not varied during the pre-scanning measurements. Furthermore, the trained model **600** can also access parts of parameter space **660** which have never been previously measured e.g. as it goes beyond the usual assessment of sensible parameter combinations and/or never refined to the required degree. The is particularly advantageous during the measuring of atypical surfaces, which, if at all possible, would require many iterations to properly measure according to the prior art techniques.

Finally, an estimated scan quality **690**, based on the trained model **600**, is provided **691** for the suggested parameter set **680.** The estimated scan quality **690** is then compared **693** with a given **671** performance threshold **670.** In the depicted embodiment it is a minimum criterion, i.e. if the estimated scan quality **690** exceeds the threshold **670** it is accepted. In this example a specific calculation step **691** and a specific comparison step **693** is depicted as part of a loop. The skilled person understands that alternative embodiments are also possible. Particularly the matched parameter space **622** can already contain the estimated scan quality **690** associated with the respective (matched) model parameters **640.** In this case a reduced parameter space consisting of the parts of the matched parameter space **622** where the estimated scan quality **690** exceeds the performance threshold might be provided. The suggested parameter set **680** is selected from this reduced parameter space.

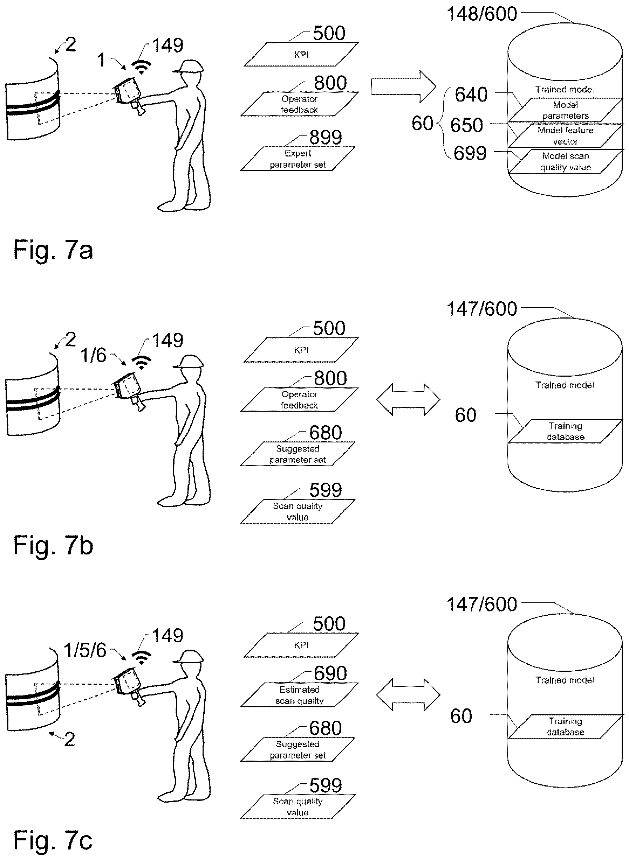

Figure 7a shows an embodiment of generating a training database **60** for training the model **600** by an expert performing a scan of a surface **2** using the laser line scanner **1** with manually defined expert parameter set **899**, or optimal parameters. The trained model **600** is hosted by an external computing resource **148** and the laser line scanner **1** provides at least the extracted KPI **500**, the parameter set provided by the expert, and an annotation, or in other words operator feedback **800**, regarding the scan quality using a wireless contact **149.** I.e. the expert provides for training database **60** pre-scan data and ground truth parameters. The training database **60**, in this example comprising model parameters **640** associated with corresponding model KPI **650** and model scan quality values **699**, is updated as a consequence. The skilled person understands that the here depicted set might be used to initialize the trained model **600.** The expert thus might be an expert of a manufacturer, distributor or a competence center employee. The depicted method can be equally used to update an existing trained model **600** by subsequent measurements. The training database **60** and trained model might **600** be hosted locally, e.g. the expert is one of the experienced operators of a company. The training database **60** and the trained model **600** can also be provided in an open-access model, and the expert might be a person with sufficient qualifications to provide operator feedback **800.** By this manner laser line scanners **1** without the inventive prediction functionality can also provide data.

Figure 7b illustrates supervised learning using a neural network **147**, particularly a convolutional neural network. The laser line scanner **1** comprises the inventive pre-scan and prediction functionality **6.** I.e. when scanning the surface **2** the laser line scanner **1** derives the suggested parameter set **680** based on the trained model **600.** After finishing the scanning, the laser line scanner **1** provides to the training database **60**, respectively the neural network **147**, the KPI **500**, the suggested parameter set 680 and the scan quality value **599**, optionally accompanied by operator feedback **800.** In contrast to the case shown in Figure 7a, there is two-way communication between the trained model **600** and the laser line scanner **1.** The training database **60** and the trained model **600** are updated as a result.

Figure 7c illustrates a reinforcement learning framework using a neural network **147.** Advantageously such learning does not require expert operators as the feedback is provided by the prediction functionality **6** and the performance assessment functionality **5.** Particularly, the prediction functionality provides **6** a suggested parameter set based on the trained model **600.** The estimated scan quality **690** is then compared with the actual scan quality **599**, i.e. the result of performing the measurement with the suggested parameter set **680.** Advantageously the data collection in this manner is not limited by the availability of expert operators, as no operator feedback is required. Moreover, the collected data would be more consistent as it relies on objective quality assessment. In other words, the trained model **600** could also have been trained without the intervention of a human expert, by resorting to a reinforcement learning framework in which the model is designed as an agent that learns optimal tuning of the parameters based on a reward mechanism that could stem for instance from the scan quality **599.**

Particularly advantageous is when the pre-scanning sequence is adapted to allow the neural network **147** to freely explore parameter space, propose particular suggested parameter sets **680**, observe their impact on scan quality **599** and iteratively learn by trial and error. The reinforcement learning agent evolves and improves its decision-making ability over time, optimizing its actions based on cumulative rewards. This way, the agent is given the freedom to explore the parameter space in a more dynamic and productive manner. This creates a flexible system with the ability to learn from mistakes and successes, making it significantly more robust in managing unforeseen situations that may arise during scanning processes. Or in other words, a trained model **600** extended in such manner can exploit a parameter space which would hard, if not impossible, to reach by data collection by experts and/or by supervised learning.

Although the invention is illustrated above, partly with reference to some specific embodiments, it must be understood that numerous modifications and combinations of different features of the embodiments can be made. All of these modifications lie within the scope of the appended claims.

## Claims

1. Laser line scanner (1) for providing a 3D geometric scanning of a surface (2) comprising a first surface part (21) with a first reflectivity (210) and a second surface part (22) with a second reflectivity (220), the second reflectivity (220) being smaller than the first reflectivity (210), wherein the laser line scanner (1) comprises
- a projector unit (11) being configured to project (119) a laser line pattern (110-114) onto the surface (2) according to settable projection parameters (41) setting different projected laser light intensities by the projector unit (11),
- a detector unit (12) being configured to provide (129) detector images (200) regarding the surface (2) with the projected laser line pattern (110-114) according to settable detector parameters (42) setting different light sensitivities of the detector unit (12),
- an evaluation functionality (3) being configured to provide (139) triangulation-based 3D geometric data (300) regarding the surface (2) based on the detector images (200) and a set of processing parameters (43), wherein the processing parameters (43) comprise processing settings for providing the 3D geometric data (300),
- a performance assessment functionality (5) being configured to extract (159) key performance indicators (500), and to provide a scan quality value (599) based on the key performance indicators (500), wherein the key performance indicators (500) reflecting a set of assessments regarding
∘ the first reflectivity (210) and the second reflectivity (220),
∘ a signal to noise ratio (501,502) of the detector image (200),
∘ a sharpness (511,512) of the detector image (200), and
∘ a point density (521,522) of the 3D geometries data (300),
- a parameter database (400) comprising a set of different projection parameters (41), a set of different detector parameters (42), and a set of different processing parameters (43),
- a pre-scan functionality (4) being configured to perform a set of different pre-scan measurements, wherein each of the pre-scan measurements comprises
∘ providing (401) pre-scan parameters (40) comprising a selected set of projection (41), detector (42), and processing parameters (43) based on the parameter database (400),
∘ acquiring (129) a pre-scan detector image (200) associated with the pre-scan parameters (40) by projecting (119) the laser line pattern (110-114) according to the selected projection parameters (41) and imaging the surface (2) according to the selected detector parameters (42), and
∘ deriving (139) respective pre-scan 3D geometric data (300) by the evaluation functionality (3) according to the selected processing parameters (43),
- a prediction functionality (6) being configured
∘ to access a performance threshold (670) criterion regarding a required scan quality value, in particular regarding a required signal to noise ratio (501,502) of the detector image, a required sharpness (511,512) of the detector image and a required point density (521,522) of the 3D geometric data,
∘ to access (601) a trained model (600) configured to generate suggested parameter sets (680) and corresponding estimated scan quality values (690), wherein the trained model (600) is trained based on a training database (60) comprising scan data and ground truth parameters,
∘ to perform an inference (621) by taking input data and passing the input data to the trained model (600), wherein the input data comprises
▪ pre-scan parameters (40), and
▪ pre-scan 3D geometric data (300), and/or pre-scan detector image (200), and/or pre-scan key performance indicators (500), in particular wherein the pre-scan measurements further comprise deriving (159) pre-scan key performance indicators (500) by the performance assessment functionality (5),
∘ to provide (689) the suggested parameter set (680) as output data of the inference (621) such that the estimated scan quality value (690) associated with the suggested parameter set (680) fulfills a performance threshold (670) criterion.

2. The laser line scanner (1) according to claim 1, wherein the projection parameters (41) comprise data for setting a temporal or spatial variation of the projected laser light intensity by the projector unit (11),
in particularly wherein the laser line pattern (110-114) comprises a first laser line (152) and a second laser line (153) and the first laser line (152) has higher intensity than the second laser line (153).

3. The laser line scanner (1) according to any one of claims 1 or 2, wherein
- the projection unit is configured to project (119) a laser line pattern (110-114) comprising a plurality of laser lines (150-158), in particular wherein the laser line pattern (110-114) is embodied as grid pattern (112-114) of the laser lines (150-158), and
- the projection parameters (41) comprise data regarding a number of the laser lines (150-158) and a distance (162,163) between the laser lines,
in particular wherein the projection parameters (41) define
- a first laser line pattern having a first laser light intensity and a first distance between the laser lines, and
- a second laser line pattern having a second laser light intensity and a second distance between the laser lines differing from the first laser light intensity and/or the first distance.

4. The laser line scanner (1) according to any one of the preceding claims, wherein the detector parameters (42) comprise data for setting a temporal variation of the light sensitivities of the detector unit (12),
in particular wherein
- the detector parameters (42) define a first part image (201) and a second part image (202), wherein the second part image (202) is acquired with a higher light sensitivity, and
- the first part image (201) is associated with the first surface part (21) and the second part (202) image is associated with the second surface part (22).

5. The laser line scanner (1) according to claims 2 and 4, wherein the suggested parameter set (680) is configured to provide a temporal variation of the sensitivities of the detector unit (12) synchronized with the temporal variation of the projected light intensities.

6. The laser line scanner (1) according to any one of the preceding claims, wherein the detector parameters (42) comprise data regarding
- an acquisition time, and
- an aperture opening, and
- optical filter data, and
- a gain, and
- a noise threshold.

7. The laser line scanner (1) according to any one of the preceding claims, wherein
- the evaluation functionality (3) is configured to provide
∘ a noise reduction, and/or
∘ an outlier identification, and/or
∘ a smoothing, and/or
∘ an interpolation filling of voids in the images and/or 3D geometric data (300), and
- the processing parameters (43) comprise data regarding said noise reduction, and/or outlier identification, and/or smoothing, and/or interpolation filling of voids.

8. The laser line scanner (1) according to any one of the preceding claims, wherein the processing parameters (43) comprise data regarding
- a brightness and contrast adjustment, and
- a sensitometry correction,
in particular, wherein the detector image (200) comprises a first part image (201) acquired with a first projection and detector parameter (42) and a second part image (202) acquired with a second projection and detector parameter (42) and the processing parameters (43) comprise data regarding a spatially resolved mixing of the first part image (201) and the second part image (202).

9. The line laser scanner according to any one of the preceding claims, wherein the laser line scanner (1) is configured
- to perform an additional pre-scan measurement using the suggested parameter set (680), and
- to perform a comparison of the scan quality values (599) associated with the pre-scan measurement and the additional pre-scan measurement,
in particular wherein the laser line scanner (1) is configured to accept the suggested parameter set (680) based on the comparison.

10. The laser line scanner (1) according to any one of the preceding claims further comprising a camera, in particular an RGB camera (17), configured to provide a camera image comprising radiometric and color information regarding the first surface part (21) and the second surface part (22).

11. The laser line scanner (1) according to claim 10, wherein the pre-scan measurement further comprises
- acquiring a camera image comprising representative portions of the first surface part (21) and the second surface part (22),
- deriving the first reflectivity (210) and the second reflectivity (220) based on the camera image,
- providing the pre-scan parameters (40) by the prediction functionality (6) based on the first (210) and the second reflectivity (220) and the trained model (600) such that the pre-scan parameters (40) are associated with estimated scan quality values (690) fulfilling the performance threshold (670) criterion and matching first (210) and second reflectivity (220),
in particular wherein the pre-scan further comprises
- deriving first color data corresponding to the first surface part (21) and second color data corresponding to the second surface part (22) based on the camera image,
- providing the pre-scan parameters (40) further based on the first and second color data such that the pre-scan parameters (40) are associated with matching first and second color data.

12. The laser line scanner (1) according to any one of the preceding claims being further configured to perform a main scanning measurement, wherein the main scanning measurement provides main scanning 3D geometric data (300) according to the suggested parameter set (680),
in particular to derive the main scanning key performance indicators (500) and main scanning scan quality value (599) by the performance assessment functionality (5).

13. The laser line scanner (1) according to any one of the preceding claims, wherein the laser scanner is configured to access a remote computing resource (148), in particular a cloud computing resource, and the trained model (600) is provided by the remote computing resource (148).

14. The laser line scanner (1) according to claims 12 and 13, further comprising a post-scanning feedback functionality being configured
- to receive user feedback (800) regarding a quality perception of the 3D geometric data (300), and
- to provide the user feedback (800) and the suggested parameter set (680), in particular the main scanning key performance indicators (500), and main scanning scan quality value (599), to the remote computing resource (148) hosting the trained model (600) and/or the training database (60),
in particular wherein
- the laser line scanner (1) is configured
∘ to receive user-provided scanning parameters, and
∘ to perform an alternative main scanning utilizing the user-provided scanning parameters,
- the post-scanning feedback functionality is further configured to provide the user-provided parameter set, alternate main scanning key performance indicators, and alternate main scanning scan quality value (599) to the remote computing resource (148) hosting the trained model (600) and/or the training database (60).

15. Computer program product for a laser scanner according to any one of claims 1 to 14 comprising a program code which is stored on a machine-readable medium, or being embodied by an electromagnetic wave comprising a program code segment, and has computer-executable instructions for causing the laser line scanner (1)
- to provide pre-scan parameters (40) comprising a selected set of projection (41), detector (42), and processing parameters (43) based on a parameter database (400),
- to acquire (129) pre-scan detector images (200) according to the projection (41) and detector parameters (42),
- to derive respective pre-scan 3D geometric data (300) according to the selected processing parameters (43), and in particular to derive (159) pre-scan key performance indicators (500),
- to access a performance threshold (670) criterion regarding a required scan quality value, in particular regarding a required signal to noise ratio (501,502) of the detector image, a required sharpness (511,512) of the detector image and a required point density (521,522) of the 3D geometric data,
- to access (601) a trained model (600) configured to generate suggested parameter sets (680) and corresponding estimated scan quality values (690), wherein the trained model (600) is trained based on a training database (60) comprising scan data and ground truth parameters,
- to perform an inference (621) by taking input data and passing the input data to the trained model (600), wherein the input data comprise
∘ pre-scan parameters (40), and,
∘ pre-scan 3D geometric data (300), and/or pre-scan detector images (200), and/or key performance indicators (500),
- to provide (689) the suggested parameter set (680) as output data of the inference such that the estimated scan quality value (690) associated with the suggested parameter (680) set fulfills a performance threshold (670) criterion,
in particular has further computer-executable instructions for causing the laser line scanner (1) to perform a scanning using the suggested parameter set (680).
